# EUROPEAN PATENT SPECIFICATION

(11) **EP 3 103 620 B1**
(45) Date of publication and mention of the grant of the patent: **18.03.2020**
(21) Application number: 15818781.5
(22) Date of filing: 08.07.2015
(51) Int. Cl.: B29C 65/14, B29C 65/60, B29C 65/72, B29L 31/30

(54) **VEHICLE DOOR TRIM BONDING DEVICE**
FAHRZEUGTÜRVERKLEIDUNGSVERBINDUNGSVORRICHTUNG
DISPOSITIF DE LIAISON DE GARNITURE DE PORTIÈRE DE VÉHICULE

(30) Priority: 11.07.2014 KR 20140087632
(43) Date of publication of application: 14.12.2016
(73) Proprietor: Gunyang Itt Co., Ltd., Busan 618-220 (KR)
(72) Inventor: KIM, Teak-Hyun, Busan 612-030 (KR)
(74) Representative: Handsome I.P. Ltd
(86) International application number: PCT/KR2015/007098
(87) International publication number: WO 2016/006938

(56) References cited:
- EP-A2- 0 618 061
- EP-A2- 1 104 223
- DD-A1- 154 563
- DE-A1- 10 352 821
- DE-B3-102004 039 192
- JP-A- 2002 067 159
- JP-A- 2003 011 232
- JP-A- 2004 066 575
- JP-A- 2005 001 268
- JP-A- 2010 208 173
- KR-A- 20110 136 586
- KR-A- 20120 010 753
- SU-A1- 1 445 979
- US-A- 6 099 291
- US-A1- 2002 017 744
- US-A1- 2006 175 729
- US-B1- 6 296 470

## Description

### BACKGROUND

### TECHNICAL FIELD

The present disclosure relates to a bonding device of a door trim for a vehicle, and more particularly to a bonding device of a door trim for a vehicle that is capable of performing a faster work.

### DISCUSSION OF THE RELATED ART

Generally, a vehicle door includes a door panel formed of a steel plate and a door trim disposed inside of the vehicle by being attached to the door panel.

The door trim is composed of a plurality of sub trims connected to one another. The door trim is assembled by a process where each of boundary parts of the sub trims is combined to each other after each of components are combined to the door panel. Up to the present time, various types of methods have been suggested for combining the each of the sub trims.

For example, Korean Patent Publication No. 2004-0035052 discloses a bolt/nut type method comprising: forming a hitching protrusion integrally on an inner surface of a rear periphery of a door trim and concurrently forming a coupling hole on a lateral surface; forming a supporting hole at a door inner panel on a position corresponding to the hitching protrusion and inserting the hitching protrusion in the supporting hole; and coupling a screw in the coupling hole and pushing the hitching protrusion with the screw to couple the hitching protrusion in the supporting hole.

In addition, Korean Patent Publication No.2004-0006608 discloses a grommet-typed method comprising: forming a quadrangular-shaped groove having a hitching sill integrally on both lateral surfaces and a lower edge part of a door trim; forming a quadrangular-shaped coupling hole at a door inner panel on a position corresponding to the quadrangular-shaped groove; forming a grommet where a length and a width of the grommet is formed the same as those of the quadrangular-shaped groove, and concurrently forming a hitching groove on a lateral surface of the grommet, such that the hitching sill matches with a lateral surface of the quadrangular-shaped coupling hole; and inserting the hitching groove in the hitching sill and the quadrangular-shaped coupling hole to couple such that an upper surface of the grommet is on a same surface with the edge part of the door trim.

In addition, Korean Patent Publication No. 2002-0031796 discloses a clip-type structure of a vehicle door trim including a main panel and a sub panel coupled to the main panel, the vehicle door trim comprising: a long slide groove formed on both sides of an outer edge; a coupling boss so provided at the sub panel as to be inserted in a coupling hole formed on the main panel; and a wedge-shaped clip coupled to a long slide groove of the coupling boss.

The foregoing methods of combining sub trips use a separate coupling member. Therefore, those method have an advantage in that the door trim can be disassembled, but also a disadvantage in that assembly of components becomes complex.

New techniques, wherein some parts of a sub trim formed of plastic are combined and melted to be permanently coupled, have been suggested in order to improve the conventional technique, and are currently in wide use.

In these melting-type methods, a protrusion is formed on one end of a sub trim and an accommodating groove is formed on another end of the sub trim such that the protrusion is coupled in the accommodating groove. Afterwards, the protruded protrusion parts are combined by being melted. The melting-type methods are advantageous in automation.

The permanent combination as described in the above must include a heat supplier applying heat on the protruded protrusion and a molding part molding the protrusion melted by the heat. At first, the heat supplier melts some part of the protrusion, and the molding part is pressurized on the melted part to finally assemble the sub trim.

The heat supplier may be categorized into a conduction type where a heating part contacts and melts the protrusion and a convection type where the heating part supplies fever to melt the protrusion. The conduction type has a disadvantage of long heating time, and the convection type has a disadvantage in that heat wasted after heating by the fever causes environmental pollution and thermal losses. Especially, the conduction type has a disadvantage in that it is difficult to mold the protrusion by pressurization of the molding part when a separate supporting part is not provided on a rear surface of the sub trim. Therefore, it is demanded a new coupling device not requiring any special supporting force.

DD154563A1 relates to the producing of a thermoplastic riveted joint.

JP2004066575A relates to heating the deformed part of a welding boss to a uniform melting temperature while preventing the influence of the heat on the surface of a fixed object.

EP0618061A2 relates to crimping a thermoplastic member by melting it and using a crimping die at a temperature lower than the melting point of the thermoplastic.

US20020017744A1 relates to integrally forming a rivet head on a body by providing a shaping punch, the lower end of which can be heated, and a flow-restricting wall closely surrounding the shaping punch, wherein a gaseous medium can be introduced into a gap between the shaping punch and the flow-restricting means.

JP2003011232 relates to heat-caulking by irradiating a protruding part with infrared rays and pressing a heated head thereto to form a swell part.

JP2002067159A discloses (in its figure 7):
a coupling device suitable for combining a first part made of a thermoplastic resin material formed with a protrusion and a second part made of a thermoplastic resin material formed with an accommodating groove for accommodating the protrusion of the first part, the coupling device comprising:
   a heat supplier configured to melt a part of the protrusion by radiant heat; and
   a molding part configured to press-mold the melted protrusion;
wherein the heat supplier includes:
   a body;
   a heating hole formed at a lower end of the body and accommodating a part of the protrusion; and
   a heater formed spaced apart from a circumferential surface of the protrusion at a predetermined distance by being disposed inside of the heating hole, and configured to emit radiant heat.

SU1445979A1 relates to welding of plastics and is intended for joining thermoplastic materials with rivets.

EP1104223A2 relates to heating a plastic component using radiant heat from an electrically heated resistance heating wire enclosed in a helical quartz tube.

DE102004039192B3 relates to forming a rivet head with a heater having a vertically adjustable lamp with a parabolic mirror by focusing a beam of light on a peg to soften it.

US6099291A1 and US6296470B1 both relate to heat staking using an infrared heat lamp to direct radiant energy onto a plastic stud to heat and soften the plastic material prior to the staking punch impacting the stud.

DE10352821A1 relates to a heater for generating a hot air jet around a rivet.

US20060175729A1 relates to forming a rivet head by means of a heatable cap from which a heating element is separatable in order to enable rapid cooling of the rivet head.

### SUMMARY

The present disclosure is contrived to solve the foregoing problem of the related art, and an object of the present disclosure is to provide a vehicle door trim coupling device that is capable of quickly coupling sub trims.

In order to achieve at least the above objects, in whole or in part, and in accordance with the purposes of the present disclosure, as embodied and broadly described, and in a general aspect, there is provided a vehicle door trim coupling device for combining a first sub trim made of a thermoplastic resin material formed with a protrusion and a second sub trim made of a thermoplastic resin material formed with an accommodating groove for accommodating the protrusion of the first sub trim, the vehicle door trim coupling device comprising: a heat supplier configured to melt a part of the protrusion by radiant heat; and a molding part configured to press-mold the melted protrusion; wherein the heat supplier includes: a body; a heating hole formed at a lower end of the body and accommodating a part of the protrusion; and a heater formed spaced apart from a circumferential surface of the protrusion at a predetermined distance by being disposed inside of the heating hole, and configured to emit radiant heat; wherein the heater takes a shape of a continuously curved flat plate, and wherein a temperature of the heater is 200°C ∼ 800°C.

In some exemplary embodiments, a temperature of the heater may be 500°C ∼ 800 °C.

In some exemplary embodiments, the molding part may include: a rod; and a contacting part attached on a distal end of the rod and configured to pressurize the melted protrusion.

In some exemplary embodiments, an air hole may be formed at the rod such that pneumatic air can be discharged through the air hole after molding is finished.

In some exemplary embodiments, an air hole may be formed at the contacting part such that pneumatic air can be discharged through the air hole after molding is finished.

In some exemplary embodiments, the body may further include, in an internal center thereof, a penetrating hole in a longitudinal direction, and the molding part may be disposed in the penetrating hole to move in a longitudinal direction of the penetrating hole.

In some exemplary embodiments, after the protrusion is melted by the heat supplier, the molding part disposed in the penetrating hole may move downward to pressurize and mold the melted protrusion.

### ADVANTAGEOUS EFFECT

The vehicle door trim coupling device according to an exemplary embodiment of the present disclosure includes a heat supplier and a molding part. The heat supplier does not waste energy, because the heat supplier instantaneously radiates heat by momentarily supplying electric power only when heating. Here, the heat supplier instantaneously provides electric power only when heating to instantaneously radiate heat, such that energy may not be wasted. In addition, the hear supplier provides radiant heat to a lateral surface of the protrusion, such that molding can be performed immediately after melting is completed, thereby cooling time can be reduced and the sub trims can be combined as well without any additional supporting force. Furthermore, there is still another advantageous effect in that the coupling time of all sub trims can be shortened to enhance the entire assembly productivity through the foregoing structure of the vehicle door trim coupling device according to an exemplary embodiment of the present disclosure.

### BRIEF DESCRIPTION OF THE DRAWINGS

FIG. 1 is a sectional view illustrating a door trim structure coupled using a vehicle door trim coupling device according to an exemplary embodiment of the present disclosure.
FIG. 2 is a block diagram illustrating a vehicle door trim coupling device according to an exemplary embodiment of the present disclosure.
FIG. 3 illustrates a shape view illustrating a heat supplier illustrated in FIG. 2.
FIG. 4 is an entire block diagram for implementing the device of FIG. 2.
FIG. 5 is a view illustrating another exemplary embodiment of FIG. 4.
FIG. 6 is an operational state view of FIG. 5.

### DETAILED DESCRIPTION

Hereinafter, an exemplary embodiment of the present disclosure will be described in detail with reference to the accompanying drawings.

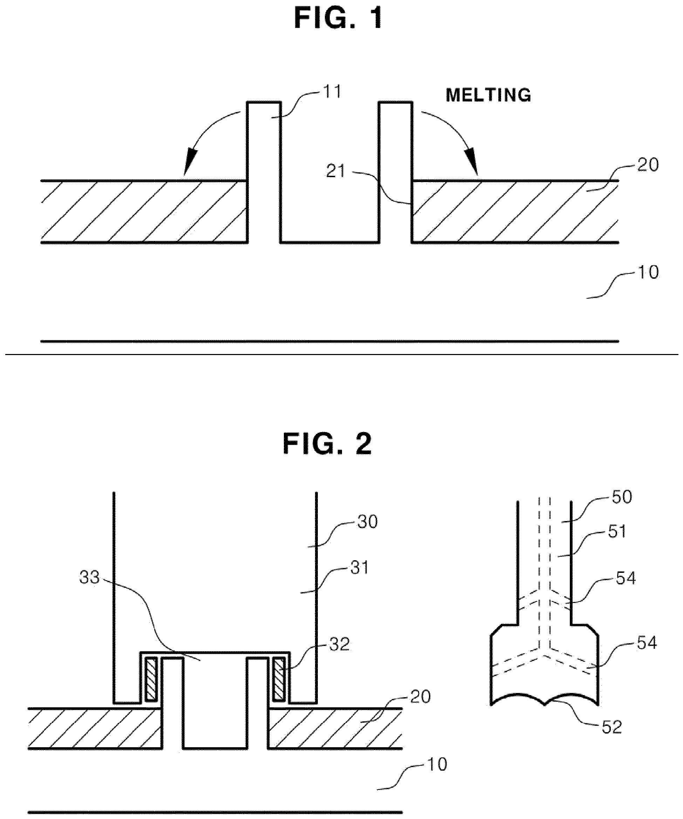

As illustrated in FIG. 1, the vehicle door trim coupling device (100) according to an exemplary embodiment of the present disclosure may be a structure for combining a first sub trim (10) formed with a protrusion (11) and a second sub trim (20) formed with an accommodating groove (21) accommodating the protrusion (11) of the first sub trim (11). Here, a distal end of the protrusion (11) inserted in the accommodating groove (21) may be cooled after being melted, such that the first sub trim (10) and the second sub trim (20) can be permanently combined with each other.

Therefore, as illustrated in FIG. 2, the vehicle door trim coupling device (100) may include a heat supplier (30) configured to melt the protrusion (11) and a molding part (50) configured to mold the protrusion (11) melted by the heat supplier (30).

The heat supplier (30) may include a body (31) and a heater (32) configured to heat a lateral circumferential part of the protrusion (11) by being disposed inside of a lower part of the body (31).

If the protrusion (11) is in a cylindrical shape, the body (31) may be in a cylindrical shape same as that of the protrusion (11). A heating hole (33) accommodating a part of the protrusion (11) may be formed at a lower end of the body (31) in which the heater (32) is disposed. The heater (32) may be disposed in the heating hole (33).

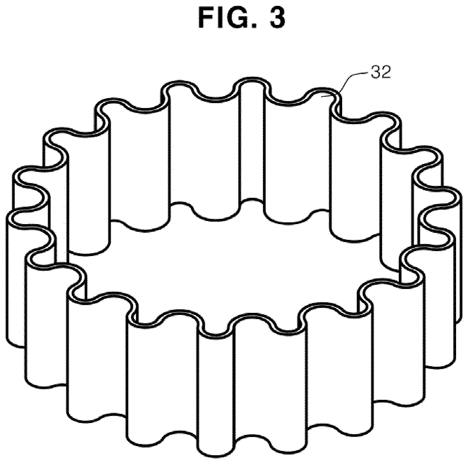

The heater (32) may be formed as a heating element radiating radiant heat by external power source. As illustrated in FIG. 3, the heating element may take a shape of a continuously curved flat plate, such that the expanded amount can be accommodated even when length of the heating element is expanded by heating.

Meanwhile, the heating hole (33) may be disposed to accommodate a part of the protrusion (11), in order for the heat supplier (30) to melt the protrusion (11).

Here, the heater (32) may be disposed being spaced apart from a circumferential surface of the protrusion (11) at a predetermined distance, such that the circumferential surface of the protrusion may receive most of the radiant heat emitted from the heater (32). Thereby, the protrusion (11) can be melted in rapid time, which is an advantageous effect of the present disclosure.

In general, the melting temperature of thermoplastic resin used in a vehicle interior material is around 165°C. Therefore, the temperature of the heater (32) may be 200°C ∼ 800 °C.

Meanwhile, if the temperature of the heater (32) is under 200°C, the melting speed of the protrusion (11) becomes slower, which is disadvantageous for using in the industry. If the temperature of the heater (32) is exceeding 800 °C, the transfer coefficient of radiant heat becomes lower in comparison to the temperature increase, which is also disadvantageous.

Alternatively, the temperature of the heater (32) may be 500°C ∼ 800°C. The radiant heat transfer coefficient of the thermoplastic resin may be maximized in the above temperature range, such that the thermoplastic resin can become the most efficient.

Meanwhile, a separation distance between a distal end (when it is curved, a curved distal end) of the heater (32) and the protrusion (11) may be in a range of 0.1mm ∼ 5mm.

If the separation distance is under 0.1mm, there is a risk in that some of the melted resin may contact the heater (32). If the separation distance is exceeding 5mm, it is somewhat disadvantageous in an aspect of radiant heat transfer from the heater (32) to the protrusion (11).

Meanwhile, the molding part (50) may include a rod (51) and a contacting part attached on a distal end of the rod (51). The molding part (50) may be configured to mold the protrusion (11) by pressurizing an upper end of the protrusion (11) melted by the heat supplier (30).

A lower end of the contacting part (52) may be so formed as to include a molded shape of the melted protrusion (11). The entire molding part (50) may pressurize the melted protrusion (11) to complete conjunction of the protrusion (11) and the accommodating hole (21).

As occasion demands, a plurality of air holes (54) may be formed at the molding part (50), such that pneumatic air may be sprayed through the air hole (54) after pressurization. Thereby, the ascended temperature of the molding part (50) may be descended.

Here, the air hole (54) may be formed at the contacting part (52). Alternatively, the air hole (54) may be formed at the rod (51) such that the pneumatic air may cool at first the contacting part (52). In addition, the air hole (54) may be formed at both of the rod (51) and the contacting part (52).

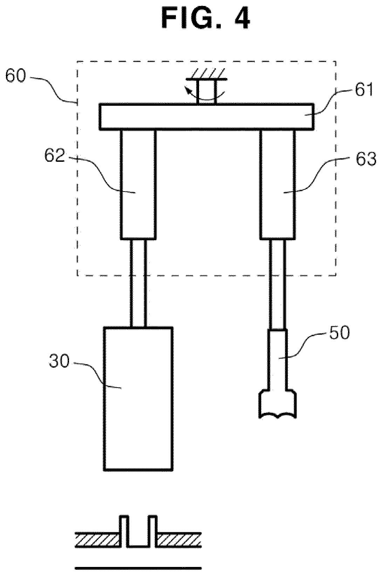

The vehicle door trim coupling device (100) according to an exemplary embodiment of the present disclosure has a structure wherein the heat supplier (30) melts at first the protrusion (11) and the molding part (50) completes conjunction by pressurizing the melted protrusion (11). Therefore, as illustrated in FIG. 4, the vehicle door trim coupling device (100) according to an exemplary embodiment of the present disclosure may comprise a driving device (60) including a rotating base (61) disposed at an upper portion, a heating actuator (62) mounted to the rotating base (61) and configured to transfer the heat supplier (30) upward and downward, and a molding actuator (63) mounted near to the heating actuator (62) and configured to transfer the molding part (50) upward and downward.

In the structure described in the above, the first sub trim (10) and the second sub trim (20) may be coupled with each other by the following process.

At first, the rotating base (61) may be so driven as to dispose the heat supplier (30) at an upper end of the protrusion (11). Then, the heating actuator (62) may be transferred downward to instantaneously heat and melt the protrusion (11).

Afterwards, the heating actuator (62) may be transferred upwards, and the rotating base (61) may be so driven as to dispose the molding part (50) at an upper end of the protrusion (11). Then, the molding actuator (63) may be transferred downward to mold the melted protrusion (11). Thereby, the conjunction between the protrusion (11) and the accommodating hole (21) may be completed.

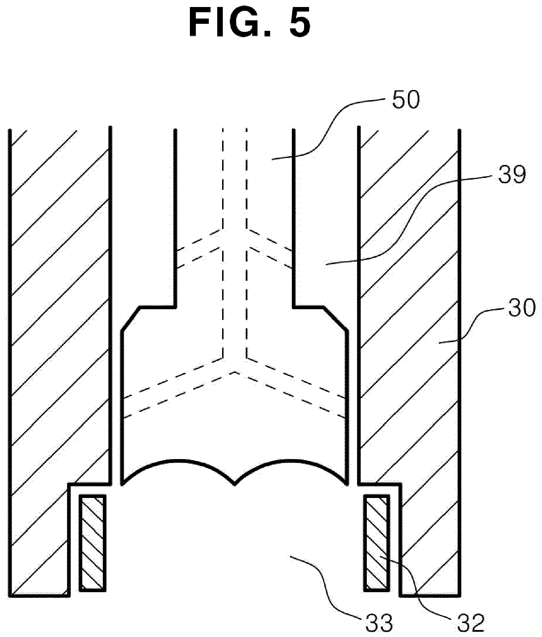

Meanwhile, according to an alternative exemplary embodiment of the present disclosure as illustrated in FIG. 5, a penetrating hole (39) may be formed in a center of a body (31) of the heat supplier (30), and the molding part (50) may be disposed in the penetrating hole (39). In this case, there is an advantage in that the entire device may be implemented such that the molding can be performed immediately after melting of the protrusion (11) is finished.

Furthermore, the vehicle door trim coupling device (100) may be implemented by using only the heating actuator (62) and the molding actuator (63), without requiring a separate rotating base (61). Therefore, the device can be implemented in a simpler configuration.

The configuration as described in the above may be driven in the following process.

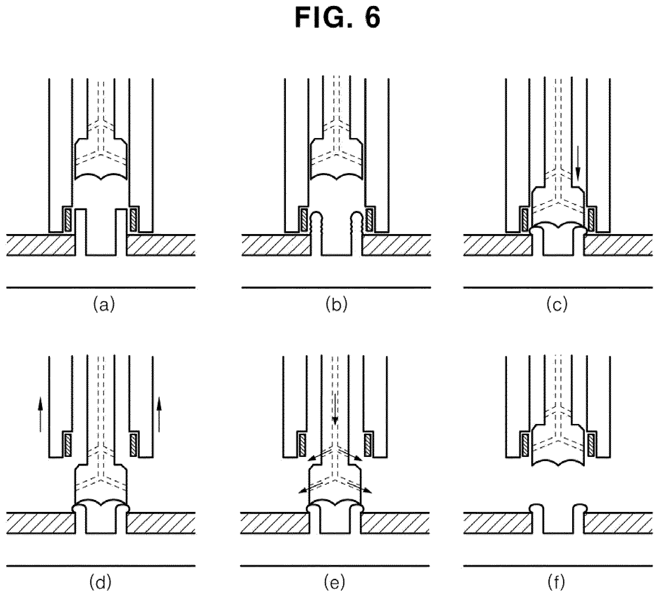

As illustrated in FIG. 6, at first, the heating actuator (62) may be so driven as to dispose the heat supplier (30) at the protrusion (11) to be molded.

Afterwards, the heat supplier (32) may be applied with electric power to melt the protrusion (11).

When melting of the protrusion (11) is completed, the molding actuator (63) may be transferred downward to press-mold the melted part of the protrusion (11).

Then, the heating actuator (62) may be transferred upward.

Afterwards, air may be spayed through the air hole (54) to cool the molding part (50).

Then, the molding actuator (63) may be driven to transfer the molding part (50) upward. Thereby, the conjunction may be completed.

Meanwhile, as occasion demands, the heating actuator (62) may be transferred downward such that the heat supplier (30) may melt the protrusion (11), the heat supplier (30) may be transferred upward, and then the molding actuator (63) may immediately transferred downward.

In addition, the air of the air hole (54) may be discharged simultaneously when the molding actuator (63) is being transferred downward.

Although some exemplary embodiments of the present disclosure have been described in the above, however, the present disclosure is not limited by the exemplary embodiments described above, but includes all kinds of various embodiments that would possibly be implemented within the scope of the claimed invention by a person having ordinary skill in the art to which the present disclosure pertains.

**LIST OF REFERENCE NUMERALS**

| | |
|---|---|
| 10: first sub trim | 11: protrusion |
| 20: second sub trim | 21: accommodating hole |
| 30: heat supplier | 31: body |
| 32: heater | 33: heating hole |
| 39: penetrating hole | 50: molding part |
| 51: rod | 52: contacting part |
| 54: air hole | 60: driving device |
| 61: rotating base | 62: heating actuator |
| 63: molding actuator | |
| 100: vehicle door trim coupling device | |

## Claims

1. A vehicle door trim coupling device for combining a first sub trim (10) made of a thermoplastic resin material formed with a protrusion (11) and a second sub trim (20) made of a thermoplastic resin material formed with an accommodating groove (21) for accommodating the protrusion (11) of the first sub trim (10), the vehicle door trim coupling device comprising:
a heat supplier (30) configured to melt a part of the protrusion (11) by radiant heat; and
a molding part (50) configured to press-mold the melted protrusion; wherein the heat supplier (30) includes:
a body (31);
a heating hole (33) formed at a lower end of the body (31) and accommodating a part of the protrusion (11); and
a heater (32) formed spaced apart from a circumferential surface of the protrusion (11) at a predetermined distance by being disposed inside of the heating hole (33), and configured to emit radiant heat,
wherein the heater (32) takes a shape of a continuously curved flat plate, and
wherein a temperature of the heater (32) is 200°C ∼ 800°C.

2. The vehicle door trim coupling device of claim 1, wherein a temperature of the heater (32) is 500°C ∼ 800°C.

3. The vehicle door trim coupling device of claim 1, wherein the molding part (50) includes:
a rod (51); and
a contacting part (52) attached on a distal end of the rod (51) and configured to pressurize the melted protrusion.

4. The vehicle door trim coupling device of claim 3, wherein an air hole (54) is formed at the rod (51) such that pneumatic air is discharged through the air hole (54) after molding is finished.

5. The vehicle door trim coupling device of claim 3, wherein an air hole (54) is formed at the contacting part (52) such that pneumatic air is discharged through the air hole (54) after molding is finished.

6. The vehicle door trim coupling device of claim 1, wherein the body (31) further includes, in an internal center thereof, a penetrating hole (39) in a longitudinal direction, and the molding part (50) is disposed in the penetrating hole (39) to move in a longitudinal direction of the penetrating hole (39).

7. The vehicle door trim coupling device of claim 6, wherein after the protrusion (11) is melted by the heat supplier (30), the molding part (50) disposed in the penetrating hole (39) moves downward to pressurize and mold the melted protrusion .

## Patentansprüche

1. Kupplungsvorrichtung für eine Fahrzeugtürverkleidung, zum Kombinieren einer ersten Unterverkleidung (10) aus einem thermoplastischen Material, geformt mit einem Vorsprung (11) und einer zweiten Unterverkleidung (20) aus einem thermoplastischen Material, geformt mit einer aufnehmenden Nut (21) zum Aufnehmen des Vorsprungs (11) der ersten Unterverkleidung (10), wobei die Kupplungsvorrichtung für die Fahrzeugtürverkleidung umfasst:
eine Wärmequelle (30), ausgebildet zum Schmelzen eines Teils des Vorsprung (11) durch Strahlungswärme und
einen formenden Teil (50), ausgebildet, den geschmolzenen Vorsprung durch Pressen zu verformen, wobei die Wärmequelle (30) einen Körper (31) umfasst, ein Heizloch (33), gebildet an einem unteren Ende des Körpers (31) und einen Teil des Vorsprungs (11) aufnehmend und eine Heizvorrichtung (32), gebildet mit Abstand zu einer Umfangsfläche des Vorsprungs (11) in einer vorgegebenen Entfernung, indem sie innerhalb des Heizlochs (33) angeordnet wird und ausgebildet, Strahlungswärme abzugeben, wobei die Heizvorrichtung (32) die Form einer kontinuierlich gekrümmten flachen Platte einnimmt und wobei die Temperatur der Heizvorrichtung (32) 200 °C bis 800 °C beträgt.

2. Kupplungsvorrichtung für eine Fahrzeugtürverkleidung nach Anspruch 1, bei der die Temperatur der Heizvorrichtung (32) 500 °C bis 800 °C beträgt.

3. Kupplungsvorrichtung für eine Fahrzeugtürverkleidung nach Anspruch 1, bei der der formende Teil (50) umfasst: eine Stange (51) und einen Kontaktbereich (52), welcher an einem distalen Ende der Stange (51) angebracht ist und ausgebildet ist, den geschmolzenen Vorsprung unter Druck zu setzen.

4. Kupplungsvorrichtung für eine Fahrzeugtürverkleidung nach Anspruch 3, bei der ein Luftloch (54) an der Stange geformt ist, derart, dass pneumatische Luft durch das Luftloch (54) abgegeben wird, nachdem der Formvorgang beendet ist.

5. Kupplungsvorrichtung für eine Fahrzeugtürverkleidung nach Anspruch 3, bei der ein Luftloch (54) an dem Kontaktbereich (52) geformt ist, derart, dass pneumatische Luft durch das Luftloch (54) abgegeben wird, nachdem der Formvorgang beendet ist.

6. Kupplungsvorrichtung für eine Fahrzeugtürverkleidung nach Anspruch 1, bei der der Körper (31) weiterhin in einem inneren Zentrum ein Durchgangsloch (39) in einer Längsrichtung umfasst und der formende Teil (50) in dem Durchgangsloch (39) angeordnet ist, um sich in einer Längsrichtung des Durchgangsloches (39) zu bewegen.

7. Kupplungsvorrichtung für eine Fahrzeugtürverkleidung nach Anspruch 6, bei der nach dem Schmelzen des Vorsprung (11) durch die Wärmequelle (30) der formende Teil (50), der in dem Durchgangsloch (39) angeordnet ist, sich nach unten hin bewegt, um den geschmolzenen Vorsprung unter Druck zu setzen und zu formen.

## Revendications

1. Dispositif de couplage de garniture de portière de véhicule pour combiner une première sous-garniture (10) faite d'une matière résine thermoplastique comportant une protubérance (11) et une seconde sous-garniture (20) faite d'une matière résine thermoplastique comportant une rainure de réception (21) pour recevoir la protubérance (11) de la première sous-garniture (10), le dispositif de couplage de garniture de portière de véhicule comprenant :
un dispositif d'application de chaleur (30) configuré pour faire fondre une partie de la protubérance (11) par de la chaleur rayonnante ; et
une partie de moulage (50) configurée pour mouler par pression la protubérance fondue ;
le dispositif d'application de chaleur (30) comprenant :
un corps (31) ;
un trou de chauffage (33) formé à une extrémité inférieure du corps (31) et recevant une partie de la protubérance (11) ; et
un élément chauffant (32) formé espacé d'une surface circonférentielle de la protubérance (11) à une distance prédéterminée en étant disposé à l'intérieur du trou de chauffage (33), et configuré pour émettre de la chaleur rayonnante,
l'élément chauffant (32) adoptant une forme d'une plaque plate incurvée de manière continue, et
une température de l'élément chauffant (32) étant comprise entre 200°C et 800°C.

2. Dispositif de couplage de garniture de portière de véhicule selon la revendication 1, dans lequel une température de l'élément chauffant (32) est comprise entre 500°C et 800°C.

3. Dispositif de couplage de garniture de portière de véhicule selon la revendication 1, dans lequel la partie de moulage (50) comprend :
une tige (51) ; et
une partie de contact (52) fixée sur une extrémité distale de la tige (51) et configurée pour mettre sous pression la protubérance fondue.

4. Dispositif de couplage de garniture de portière de véhicule selon la revendication 3, dans lequel un évent (54) est formé à la tige (51) de telle sorte que de l'air comprimé est évacué à travers l'évent (54) une fois que le moulage est fini.

5. Dispositif de couplage de garniture de portière de véhicule selon la revendication 3, dans lequel un évent (54) est formé à la partie de contact (52) de telle sorte que de l'air comprimé est évacué à travers l'évent (54) une fois que le moulage est fini.

6. Dispositif de couplage de garniture de portière de véhicule selon la revendication 1, dans lequel le corps (31) comprend en outre, dans un centre interne de celui-ci, un trou pénétrant (39) dans une direction longitudinale, et la partie de moulage (50) est disposée dans le trou pénétrant (39) pour se déplacer dans une direction longitudinale du trou pénétrant (39).

7. Dispositif de couplage de garniture de portière de véhicule selon la revendication 6, dans lequel, une fois que la protubérance (11) a été amenée à fondre par le dispositif d'application de chaleur (30), la partie de moulage (50) disposée dans le trou pénétrant (39) se déplace vers le bas pour mettre sous pression et mouler la protubérance fondue.
